(19) Europäisches Patentamt European Patent Office Office européen des brevets

(11) **EP 4 633 068 A1**

(12) **EUROPEAN PATENT APPLICATION**

(43) Date of publication:
**15.10.2025 Bulletin 2025/42**

(21) Application number: **25163383.0**

(22) Date of filing: **13.03.2025**

(51) International Patent Classification (IPC):
*H04J 3/06* (2006.01)　　　　*H04L 43/0864* (2022.01)
*H04W 56/00* (2009.01)

(52) Cooperative Patent Classification (CPC):
**H04J 3/0667; H04L 43/0864; H04W 56/0015**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.04.2024 FI 20245383**

(71) Applicant: **Nokia Solutions and Networks Oy 02610 Espoo (FI)**

(72) Inventors:
• **MORPER, Hans-Jochen Erdweg (DE)**
• **LI, Zexian Espoo (FI)**

(74) Representative: **Nokia EPO representatives Nokia Technologies Oy Karakaari 7 02610 Espoo (FI)**

(54) **LINK ADAPTIVE SYNCHRONIZATION PROTOCOL (LASP)**

(57)　Described herein is a first network element, a second network element, a system, and a method for link adaptive synchronization in a network including a first and second network element, and a computer readable medium storing instructions. Compared to conventional synchronization, the present disclosure provides a method to enable the use of PTP time synchronization for TDD based connections, such as the 5G air interface, by limiting the jitter per link (uplink/downlink) to a minimum.

Fig. 14

**Description**

TECHNOLOGY

The present disclosure relates to improvements for time synchronization in accordance with IEEE 1588 and/or IEEE 802.AS, and for example to improvements for time synchronization in the field of IIoT for manufacturing and 5G air-interfaces.

BACKGROUND

Any discussion of the background art throughout the specification should in no way be considered as an admission that such art is widely known or forms part of common general knowledge in the field.

Time synchronization is a common feature of today's IT networks and is needed whenever peering nodes of a network require to act simultaneously. However, there are different levels of synchronicity ranging from seconds (e.g., SNTP, simple network time protocol) to sub-μs (TSN, time sensitive networks). Time synchronization protocols are typically based on the standards IEEE 1588 or IEEE 802.1 AS. Today, most solutions are based on IEEE 1588 (PTP over UDP) allowing for synchronization accuracy in the (sub-) milliseconds range. Main use cases (e.g., cameras, sensors, ...) require that Ethernet or IP packets shall be provided with a timestamp that allows to distinguish the timely order of e.g., measurement data at analyzing nodes. Industry owners are currently trying to introduce radio into the manufacturing domain e.g., to allow for more flexibility by avoiding wiring. 3GPP addressed this topic in its various 5G releases while from 3GPP release 16 on, time synchronization will follow TSN principles and provide a sub-μsec accuracy also for wireless 5G connections. However, chipset vendors are still reluctant to implement TSN sync-features at the UE side and TSN is yet not widely rolled out.

Synchronization using PTP (Precision Time Protocol) is a 3GPP feature of release 16 and in general in release 17. However, TSN is not widely spread, especially not in USA or Asia -Pacific countries. Accordingly, UE manufacturers are not ready to provide time synchronization features as required in release 16 and release 17. Therefore, there are no UEs currently on the market that can be used for appropriate time synchronization, at least for the next years to come (and maybe never). Nevertheless, time synchronization is an important feature, and without it 5G will not be accepted in the manufacturing domain. At the same time synchronization demands are rather moderate (approximately around 1 ms) at the control bus level and do not require the μs accuracy as defined in release 16 or release 17.

In detail, the so-called PTP protocol, which is defined in the IEEE 1588 standard (IEEE: Institute of Electrical and Electronical Engineers), is currently favored as a protocol for clock and phase synchronization of time clocks via asynchronous networks. The standard defines a protocol enabling precise synchronization of clocks in measurement and control systems implemented with technologies such as network communication, local computing and distributed objects. The protocol is applicable to systems communicating by local area networks supporting multicast messaging including but not limited to Ethernet. The protocol enables heterogeneous systems that include clocks of various inherent precision, resolution, and stability to synchronize to a grandmaster clock. The protocol supports system-wide synchronization accuracy in the sub-microsecond range with minimal network and local clock computing resources. The standard therefore basically enables a very high level of synchronization accuracy.

However, the hardware requirements for achieving this synchronization accuracy may not be achieved by most of the UE on the market nowadays. Accordingly, it is an aim of the present disclosure to close a gap that should help to encourage companies to use 5G also for manufacturing and automation use cases. Accordingly, one object may be to achieve approximately 1 ms synchronization accuracy with current UEs on the market.

Hence, there is a need to achieve a synchronization accuracy of approximately 1 ms with current UEs. In particular it may also be an object to achieve a synchronization with an implementation of the PTP protocol in accordance with the IEEE 1588 standard, through which high synchronization accuracies can be achieved with relatively little effort.

SUMMARY

In accordance with one aspect of the present disclosure, there is provided a first network element configured to calibrate at least one periodicity parameter for time synchronization, wherein the first network element comprises:

at least one processor; and
at least one memory storing instructions that, when executed by the at least one processor, may cause the first network element at least to:

probe a roundtrip delay by sending periodic messages to a second network element with repetition rates; and/or
derive a time offset between the first network element and the second network element; and/or

calculate a receiving time when a first message will be received by the second network element; and/or send, to the second network element, a time stamp based on the receiving time in a message. The present disclosure enables the use of time synchronization for TDD/TDMA based connections, such as the 5G air interface, by limiting the jitter per link (uplink / downlink) to a minimum.

In some examples, the first network element may be further caused to calibrate at least one periodicity parameter for uplink and downlink in particular separately.

In some examples, the first network element may be configured to calibrate at least one periodicity parameter for supporting PTP, Precision Time Protocol, time synchronization.

In some examples the first network element is a gNB, a distributed unit (DU) or a centralized/central unit (CU) and the second network element may be a UE and/or an industry device.

In some examples, the key functionality of the synchronization system may be a LASP (link adaptive synchronization protocol). This protocol runs between two software entities, a master part at the core side and a slave part at the UE side.

In some examples, the first network element is caused to probe a roundtrip delay by sending periodic messages to a second network element with repetition rates in accordance with a given TDD, Time Division Duplex, or a given TDMA, Time Division Multiple Access, pattern.

In some examples, the calculation of the receiving time is performed when a LASP, Link Adaptive Synchronization Protocol, message (which may be the first message) will be received by the second network element.

In some examples, the first network element may be further caused to, for calibration of the periodicity parameters, set an offset and/or a local start time for sending messages by the first network node based on a smallest mean roundtrip delay. The round-trip delay (RTD) or round-trip time (RTT) may be the amount of time it takes for a signal to be sent plus the amount of time it takes for acknowledgement of that signal having been received.

In some examples, for an uplink calibration, the first network element may be configured to send replies in accordance with a downlink timing scheme derived at a downlink calibration.

In some examples, sending to the second network element the time stamp in the message may further comprise sending the message at a time following the at least one periodicity parameter for uplink and downlink derived during calibration.

In some examples, the first network element may be further caused to intermit the transfer of at least one PTP message.

In some examples, before probing the roundtrip delay, the first network element may be further caused to send, to the second network element, a system time of the first network element.

In some examples, the first network element is further configured to apply data transfer between different standards with or without modification of said data. In particular the first network element may be configured to mediate between different standards, i.e. between IEEE 1588 (IP/UDP) and IEEE 802.AS (Ethernet, layer 2). Moreover, since in a PTP context, LSAP is realized as a boundary clock (terminating and re-establishing a PTP connection), the first network element may be configured to mediate between both standards such that IEEE 1588 devices (such as UEs) may be added to a pure layer 2 factory and vice versa.

In some examples, the first network element may be further caused to carry out a drift test to distinguish a drift rate at the second network element.

In some examples, after deriving the time offset between the first network element and the second network element, the first network element may be further caused to:

   send, to the second network element, at least one additional first probe;
   receive, from the second network element, a response for each of the at least one additional first probe;
   monitor the roundtrip delay and/or a jitter offset on receiving the response of each of the at least one additional first probe from the second network element.

In some examples, after sending, to the second network element, the time stamp based on the receiving time in the message, the first network element may be further caused to:

   send, to the second network element, at least one additional second probe;
   receive, from the second network element, a response of each of the at least one additional second probe;
   monitor the roundtrip delay and/or a jitter offset on receiving the response of each of the at least one additional second probe from the second network element.

In some examples, if one of the monitored delays and/or jitter offsets is violating a first predetermined range, the first network element may be configured to recalibrate at least one periodicity parameter for uplink and/or downlink.

In some examples, for recalibrating, the first network element may be configured to:

> probe the roundtrip delay by sending the periodic messages to the second network element with the repetition rates;
> derive the time offset between the first network element and the second network element; and
> set an offset and/or a local start time at the first network node based on a smallest mean roundtrip delay.

In some examples, calculating the receiving time, when the LASP message will be received by the second network element, may be performed in accordance with:

$$\text{TargetTime\_Slave} = \text{Time\_Master} + \overline{d_d} + \overline{\text{Off}} + \text{PreNumber};$$

wherein, TargetTime_Slave is the time at the second network element when the LASP message will be received by the second network element;

> the parameter Time_Master is the time when the LASP message is sent from the first network element,
> the parameter $d_d$ is a downlink delay which means the time difference between the first network element sends the LASP message and the second network element receives the LASP message, the parameter Off is an offset value, the parameter PreNumber is a number derived based on roundtrip delay.

In some examples, it is defined that $\text{Off} = \dfrac{d_d - d_u}{2} + \text{PreNumber}$; wherein

$$\overline{\text{Off}} = \sum_{i=0}^{n-1} \frac{d_{d,i} - d_{u,i}}{2*n} + \text{PreNumber},$$

$$\text{PreNumber} = (d_{min} - d_{RT})/2,$$

wherein n may be a natural number greater than or equal to 1, i is a natural number less than n, $\overline{d_d}$ is average of n $d_d$, $\overline{\text{Off}}$ is average of n Off, $d_{min}$ is a minimum delay of uplink and/or downlink, $d_{RT}$ is a roundtrip delay.
In some examples, the first network element configured to calibrate the at least one periodicity parameter for time synchronization may include: the first network element configured to calibrate the at least one periodicity parameter for supporting PTP, Precision Time Protocol, for time synchronization.
In some examples, the probing the roundtrip delay by sending the periodic messages to the second network element with the repetition rates may include: probe the roundtrip delay by sending the periodic messages to the second network element with the repetition rates in accordance with a given TDD, Time Division Duplex, a given TDMA, Time Division Multiple Access, or a flexible duplex, pattern.
In some examples, the first message may be a LASP, Link Adaptive Synchronization Protocol, message.
In accordance with a another aspect of the present disclosure, there may be provided a second network element configured to calibrate at least one periodicity parameter for supporting PTP, Precision Time Protocol, time synchronization, wherein the second network element comprises:

> at least one processor; and
> at least one memory storing instructions that, when executed by the at least one processor, may cause the second network element at least to:

>> receive, from the first network element, a time stamp determined in accordance with any one of the previous aspects; and/or
>> calibrate periodicity parameters at the second network element in accordance with the received information, in particular, adjusting the system time of the second network element in accordance with the received time stamp.

In some examples, before the receiving, from the first network element, the time stamp, the second network element may be configured to:

> receive, from the first network element, a system time of the first network element;
> set the system time of the second network element in accordance with the received system time of the first network element.

In some examples, for calibration of the periodicity parameters the second network element may be configured to: set an offset and/or a local start time for sending messages by the second network node based on a smallest mean roundtrip delay.

In accordance with a yet another aspect of the present disclosure, there is provided a system including one or more first network elements according to the first aspect of the present disclosure, and one or more second network elements in accordance with at least one of the first aspect of the present disclosure.

In accordance with an aspect of the present disclosure, there is provided a method for link adaptive synchronization in a network including a first and second network element, the method comprising:

probing, by a first network element, a roundtrip delay by sending periodic messages to a second network element with repetition rates;
deriving, by the first network element, a time offset between the first network element and the second network element;
calculating, by the first network element, a receiving time when a first message is received by the second network element;
sending a message, by the first network element to the second network element, including a time stamp based on the receiving time.

In some examples, the method further comprises calibrating, by the first network element, at least one periodicity parameter for uplink and downlink separately.

In accordance with another aspect of the present disclosure, there is provided a computer readable medium storing instructions thereon, the instructions, when executed by at least one processing unit of a machine, causing the machine to perform the method according to the fourth aspect of the present disclosure.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

BRIEF DESCRIPTION OF THE DRAWINGS

Example embodiments of the disclosure will now be described, by way of example only, with reference to the accompanying drawings in which:

Figure 1 schematically illustrates an example of a typical manufacturing scenario according to an example embodiment of the present disclosure;
Figure 2 schematically illustrates a slot pattern of n78 and n79;
Figure 3 schematically illustrates examples of the Precision Time Protocol (PTP) according to IEEE 1588;
Figure 4 schematically illustrates an example of an implementation of the PTP protocol;
Figure 5 schematically illustrates a jitter pattern when data is conveyed arbitrarily;
Figure 6 schematically illustrates histograms of a jitter pattern when data is conveyed arbitrarily for uplink and downlink separately;
Figure 7 schematically illustrates histograms of the best result of a jitter pattern that was achieved by adjusting the BER and/or by employing pro-active uplink scheduling;

Figure 8 schematically illustrates histograms of a jitter pattern which is more asymmetric;
Figure 9 schematically illustrates one possible frame structure of a 5G air-interface;
Figure 10 schematically illustrates downlink calibration;
Figure 11 schematically illustrates uplink calibration;
Figure 12 schematically illustrates a roundtrip jitter for a 1-4 pattern after calibration;
Figure 13 schematically illustrates histograms of a roundtrip jitter for a 1-4 pattern after calibration;
Figure 14 schematically illustrates synchronization realized by a boundary clock implementation;
Figure 15 schematically illustrates synchronization phases;
Figure 16 schematically illustrates relationship between synchronization phases and system stability;
Figure 17 schematically illustrates pre-sync phase.

DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however.

It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth®, personal communications services (PCS), ZigBee®, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

Notably, identical or like reference numbers used in the figures of the present disclosure may, unless indicated otherwise, indicate identical or like elements. Similarly, identical or like messages (as well as the contents comprised therein) used in the figures of the present disclosure may, unless indicated otherwise, indicate identical or like messages (and the contents therein), such that repeated description thereof may be omitted for reasons of conciseness. Further, it may be worthwhile to note that, unless specifically indicated otherwise, the character "/" used throughout the present application may generally indicate an "or" relationship or an "and/or" relationship between the associated objects, depending on various circumstances and/or contexts as may be clearly understood and appreciated by the skilled

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application on capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:

Option 1 (1A-like split):

- The function split in this option is similar to the 1A architecture in DC. RRC is in the central unit. PDCP, RLC, MAC, physical layer and RF are in the distributed unit.

Option 2 (3C-like split):

- The function split in this option is similar to the 3C architecture in DC. RRC and PDCP are in the central unit. RLC, MAC, physical layer and RF are in the distributed unit.

Option 3 (intra RLC split):

- Low RLC (partial function of RLC), MAC, physical layer and RF are in the distributed unit. PDCP and high RLC (the other partial function of RLC) are in the central unit.

Option 4 (RLC-MAC split):

- MAC, physical layer and RF are in the distributed unit. PDCP and RLC are in the central unit.

Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:

- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC _INACTIVE state when an RRC connection has been established.

In RRC_CONNECTED state a UE may:

- store the AS context;
- transfer unicast data to/from the UE;
- monitor control channels associated with the shared data channel to determine if data is scheduled for the data channel;
- provide channel quality and feedback information;
- perform neighbouring cell measurements and measurement reporting.

The RRC protocol includes e.g. the following main functions:

- RRC connection control;
- measurement configuration and reporting;
- establishment/modification/release of measurement configuration (e.g. intra-frequency, inter-frequency and inter-RAT measurements);
- setup and release of measurement gaps;
- measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

As illustrated above, UE manufacturers are not ready to provide time synchronization features as required in release 16 and release 17. Therefore, there are no UEs currently on the market that can be used for appropriate time synchronization, at least for the next years to come. Nevertheless, time synchronization is an important feature, and without it 5G will not be accepted in the manufacturing domain. At the same time synchronization demands are rather moderate (approximately around 1 ms) at the control bus level and do not require the $\mu$s accuracy

Accordingly, the technology fields this disclosure may be applied primarily to IIoT for manufacturing, time synchronization according to IEEE 1588 and/or IEEE 802.AS, and 5G air-interfaces, such as TDD. It is aimed to close a gap that should help to encourage companies to use 5G also for manufacturing and automation use cases.

References are now made to the figures. In particular, it is to be noted that identical or like reference numbers used in the figures of the present disclosure may, unless indicated otherwise, indicate identical or like elements, such that repeated description thereof may be omitted for reasons of conciseness.

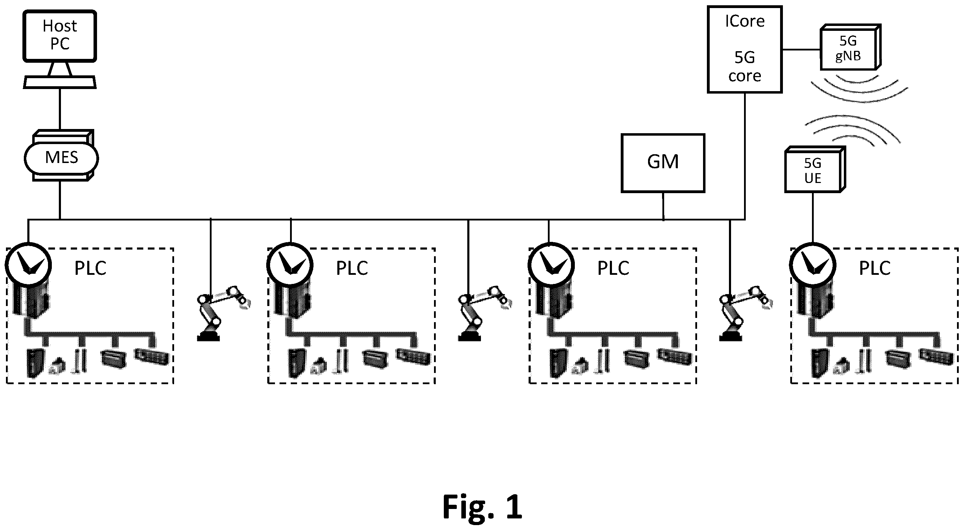

Typical manufacturing scenarios are shown for example in figure 1. Production cells are connected via a control to a Manufacturing Execution System, MES. Within the production cell (which in many cases is within the machine) different nodes are connected via a field bus.

Typical protocols used in the field bus are e.g. EtherCAT (US, Asia-Pacific) or TSN (time sensitive network). Timing demands of operations are in the sub-$\mu$s range, and companies nowadays do not plan to introduce radio in this area of the production system. Production cells are interfacing the MES via a Program Line Control, PLC. Here common IP protocols are used and in particular in US/APAC, Ethernet/IP is dominant and OPC UA is taking up momentum. This is where many companies would like to introduce radio links, e.g. to allow for flexible rearrangements of production cells. Messages conveyed across the bus are for example quality measurement reports that allow to interact with the production cells. Here time synchronization (indicated as clock in figure 1) plays an important role: messages need to be accurately time-stamped to allow systems (in particular AI based systems) to take the right actions at the right time. It is noted that for accurate time stamping it is necessary to have a clock synchronicity at each affected node (e.g. PLC or MES). However, the delivery of the messages themselves does not have to be with the same accuracy (as would be required at the field bus). A use case is therefore to replace a wireline link of a PLC by a 5G connection.

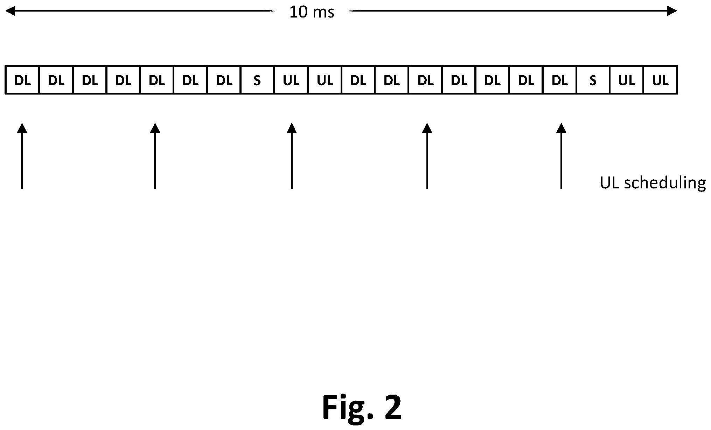

Since 5G radio shall be introduced to the manufacturing environment, the TDD frame structure as shown in Figure 2 is important. Here, only the timing relevance shall be discussed. Typical industry bands are in the range of 3.6- 3.7 GHz in Europe and 3.6 to 4.8 in Japan (FR1, 5G SA). Additionally, there are mm Wave bands assigned (FR2, NSA and SA). Figure 2 shows a slot pattern of n78 and n79 in Japan as mandated by the regulators. It is important to note that the uplink slots are only available for 20% of a 10ms frame leading to additional delay and jitter as will be discussed further on.

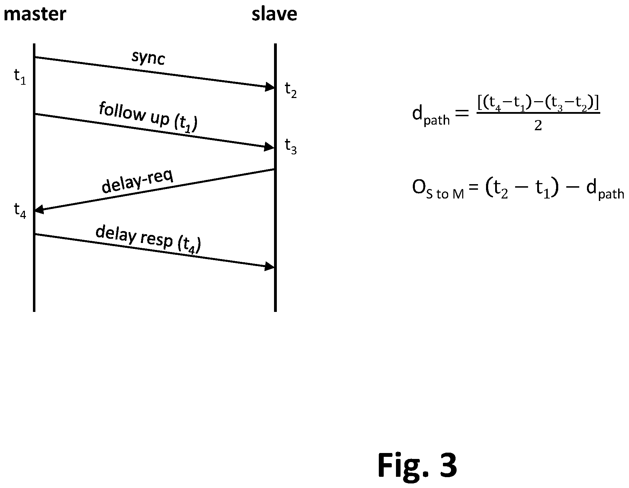

PTP (Precision Time Protocol) according to IEEE 1588 is definitely the most widespread method for synchronizing nodes in a network. It may run on top of layer 3 (e.g. UDP) and many industry devices have implemented a client based on LinuxPTP: IEEE 1588 is a very powerful standard which defines many profiles (industry, Telecom, ...). As shown in figure 3, PTP requires a sync master, or grand master (GM), respectively. This node is the node having the most accurate clock in the network (e.g. GPS synced). It sends out sync-messages and follow-up messages regularly (depending on the profile, e.g. every 50 ms or every 100 ms). Those messages (typically broadcast) can be received by PTP clients (e.g. a sync slave), which intend to sync their own clock will send a delay request and receive a delay response in return. The times associated with this will finally allow to derive the path delay and the offset to the master clock.

As shown in figure 3,

$$d_{\text{path}} = \frac{[(t_4 - t_1) - (t_3 - t_2)]}{2} \qquad (1)$$

$$O_{S \text{ to } M} = (t_2 - t_1) - d_{path} \qquad (2)$$

Wherein, $d_{path}$ is the path delay, and $O_{S \text{ to } M}$ is the offset of the PTP client to the master clock.

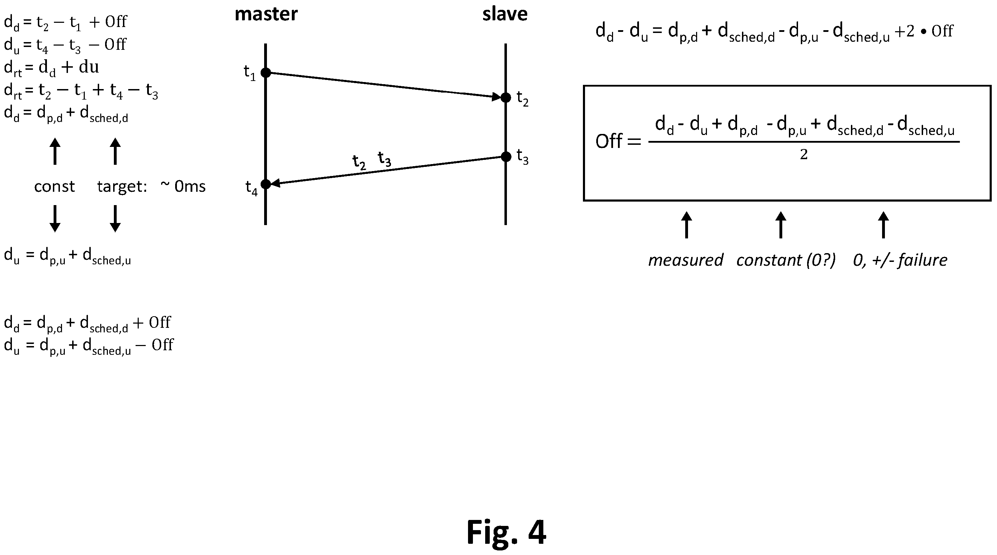

It is assumed that a master node is providing the correct time, either because it is synchronized by a grandmaster or simply because it is the grandmaster itself. This master node shall take the task to assure that connected nodes (slave node in figure 4) will also be enabled to synchronize to the correct time with an accuracy of 1 ms or better.

To achieve this, the master will continuously send probe messages at a time $t_1$ which are received at the slave at time $t_2$. As a consequence, the slave will send back a probe- response at time $t_3$ and the master will receive it at time $t_4$.

So $t_1$ and $t_4$ reflect system times at the master whereas $t_2$ and $t_3$ reflect system times at the slave. It is assumed that the slave times deviate with the value Off from the master times and in order to synchronize to the master this value Off needs to be derived. To be more precise, most typically, the slave system time does not deviate from the master system time with a constant value Off but also drifts with a drift rate (typically 0.1 to 5 ms/sec). This drifting aspect will be neglected at the moment but will be discussed further in the following.

Deplorably the value of Off cannot be measured directly. What can be measured is the roundtrip delay $d_{rt}$. What can be stated is that the roundtrip delay $d_{rt}$ comprises of the sum of uplink delay $d_u$ and downlink delay $d_d$, however, neither of those can be measured directly. What will be measured are "raw" delays for downlink and uplink $d_{dr}$ and $d_{ur}$ by the differences between $t_2$ and $t_1$ and $t_4$ and $t_3$ knowing that the downlink delay $d_{dr}$ is given by $t_2-t_1$ + Off and the uplink delay $d_u$ is given by $t_4-t_1$ - Off with Off being unknown. The roundtrip delay, however, can be derived quite easily by building the sum of $d_d$ and $d_u$ since here the value for Off equals out.

Typical implementations of the PTP protocol build on the fact that uplink and downlink delays are fairly equal in value (for wireline connections) in this case the value for Off can be simply derived by half of the difference between $d_{dr}$ and $d_{ur}$. However, using a TDD based 5G air-interface, the uplink and downlink delays may be significantly different.

Figure 4 shows the equation for the Offset in that case. Here, all delay components that are part of the raw delays are listed. The measured delays comprise of the "real" uplink/downlink delays $d_d$ and $d_u$ but also comprise two additional components (in uplink and in downlink). The first part is denoted as processing delay $d_{p,d}$ and $d_{p,u}$ which reflect the delay coming from the system parts, namely UE and gNB. Since those may come from different vendors and since each vendor may use different platforms and since different schedulers may be involved, this delay contribution can hardly be distinguished. At least, as a first assumption, it may be considered constant. The second part comprises of the delay coming from scheduling, $d_{sched,d}$ and $d_{sched,u}$. This is by far the highest delay contribution.

One key principle of this synchronization approach is to get a reasonable value for the processing delay (by measuring and comparing) and to minimize the scheduling delay (to theoretically zero). The value for the constant part of the processing delay is denoted as *magic number* (or PreNumber) further on and the minimizing of the scheduling delay will be addressed by calibration methods. It shall be stated here already that (after thorough testing) it turned out that the best synchronization results can be achieved with the *magic number* being set to zero (which somehow is an indication that the processing delay is the same for uplink and for downlink). It shall also be stated that the propagation delays are neglected for distances of 10m to 100m (which would be the same for uplink and downlink anyway).

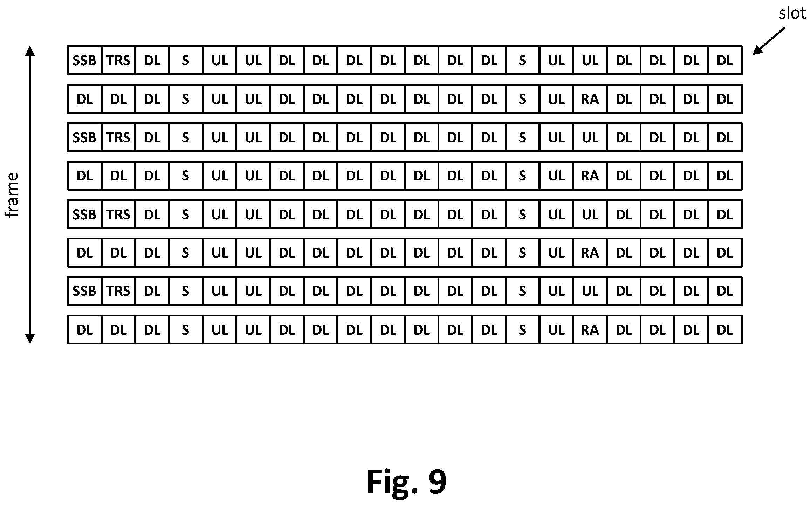

The 5G air interface for industry bands (e.g., n78 for Europe and n79 for Japan) has a TDD frame structure (example see figure 9) with a frame comprising eight subframes with twenty 0.5 slot each, i.e., each subframe has a length of 10 ms.

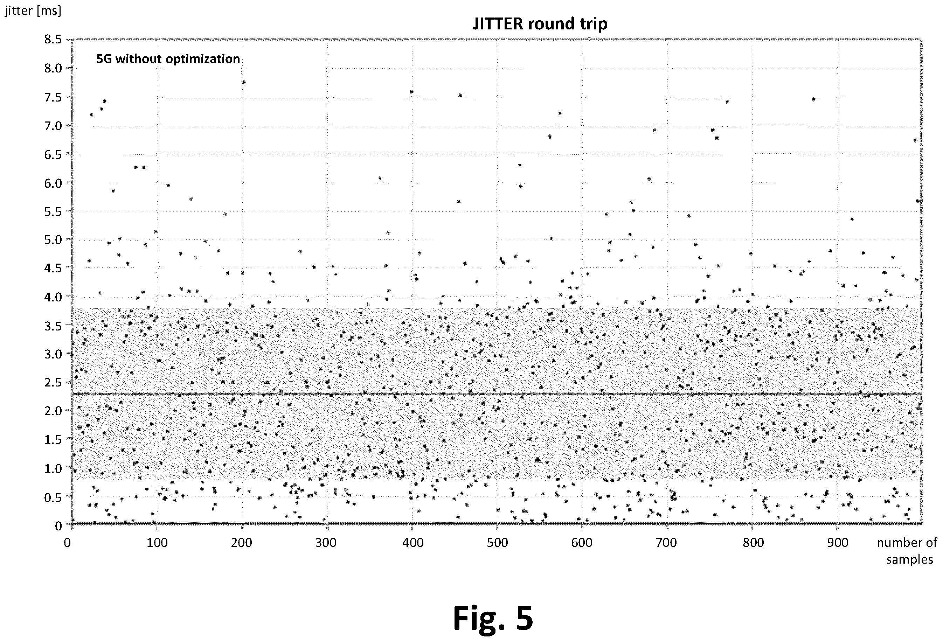

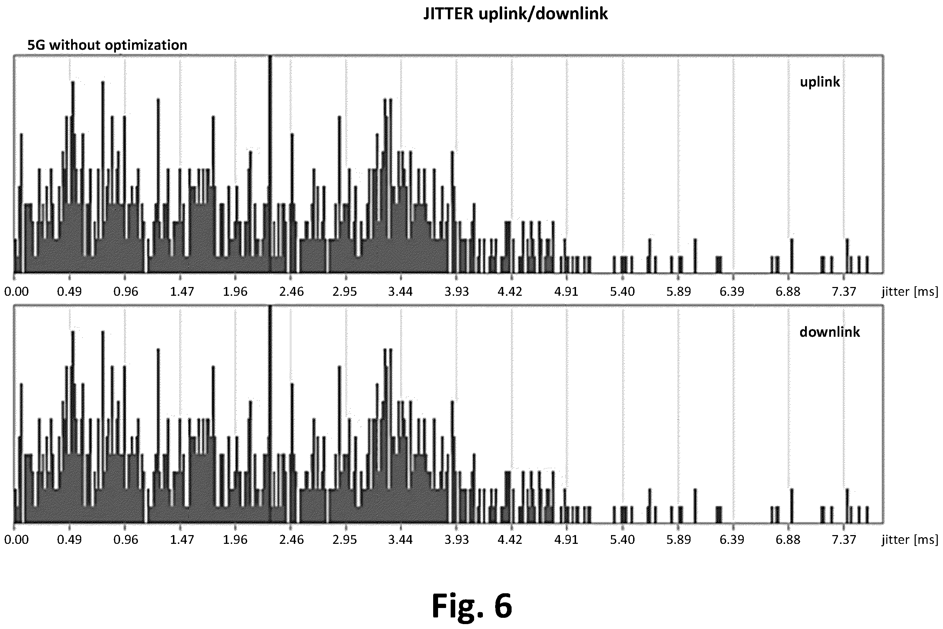

When data will be conveyed arbitrarily, i.e., whenever there is something to send, it will be sent (to the scheduler) immediately over an air-interface in a typical setup (e.g., 3-7 or 3:7 pattern), a jitter pattern as can be seen in figure 5 will be the result (the following figure 6 shows the same for uplink and downlink separately displayed as histograms). Here, the jitter almost arbitrarily ranges between 0 and 8 ms - hoping for a 1 ms synchronization synchronicity would be quite ambitious.

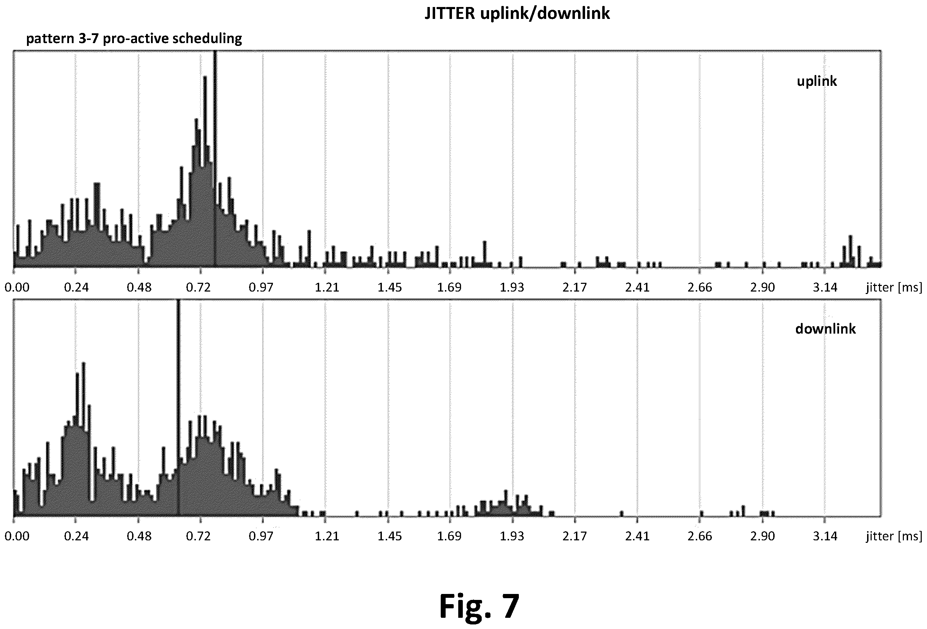

In order to achieve better results, the air-interface parameters can be tweaked e.g., by adjusting the bit error rate (BER) and/or by employing pro-active uplink scheduling. The next figure 7 shows the best result that was achieved by tweaking those parameters. What can be seen is quite some improvement: jitter stays in the range of about 1ms but still there is significant evidence where jitter is too high to aim for a 1 ms target.

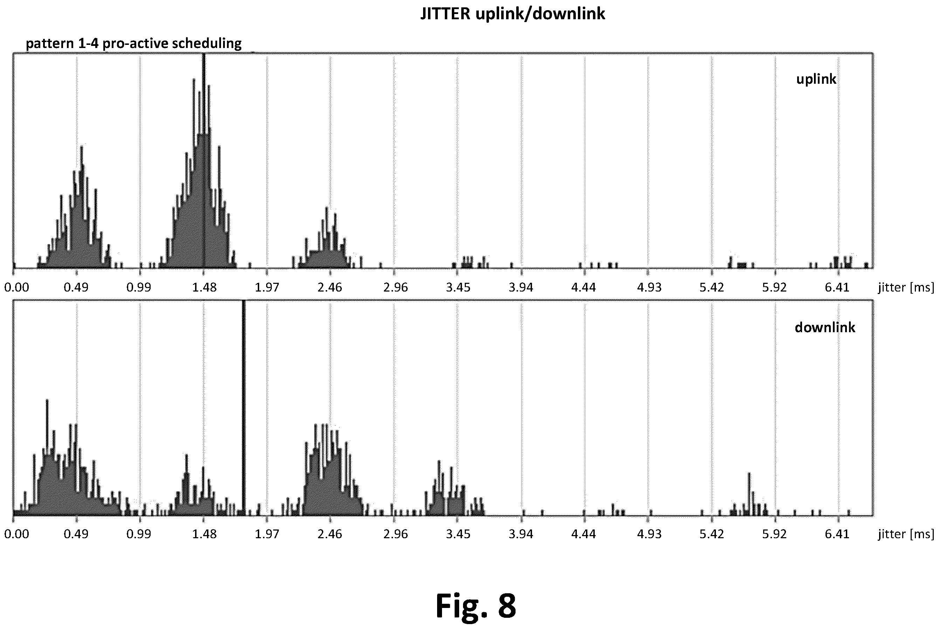

And finally, things get even worse if a pattern will be applied which is more asymmetric as e.g., 1-4 for band n78 in Japan (figure 8). Here there a multiple jitter peaks going far beyond 1 ms.

The first lesson learned is that sufficient accuracy (i.e., bringing down the jitter fairly below 0.5 ms with minimum variation) cannot be achieved by tweaking of the air-interface parameters alone.

To explain what kind of additional means may help to get the jitter (and delay) down to a minimum, an example based on a distinct pattern will be discussed.

Figure 9 shows one possible frame structure of a 5G air-interface (here band 78 for Japan, 3.6 to 3.7 GHz with a 1-4 pattern). In the example, there are four times more resources (slots) assigned for downlink than for uplink - which is quite unsymmetric. Typical patterns for industry bands in Europe may have a more balanced distribution like e.g., 3-7. As shown in figure 9, each frame comprises eight subframes and each subframe with 10 ms is comprising 20 slots of 0.5 ms; roughly 20 % assigned for uplink data transmission and 80 % for downlink data transmission. If the air-interface is accessed randomly, i.e., whenever something needs to be sent, for example in uplink direction by the UE, it might happen that the UE will access the air interface (or the scheduler, respectively) exactly at this point in time when a subframe is started to be scheduled (at the first slot of the subframe). As can be seen in the figure 9, the first four slots are not assigned for uplink transmission, the first possible slot at which data can be conveyed in uplink would be the fifth slot - resulting in that it will take four times 0.5 ms before the data can be conveyed in uplink direction. If the UE would send the data at that point in time where the fifth slot is scheduled, data would be conveyed immediately (0 ms). As can be seen, depending on how the data arrival time matches the scheduling period a data packet may suffer a scheduling delay between 0 and 4 ms.

In addition, for uplink transmission, it is important that the scheduler is ready for transmission when a packet shall be sent. Therefore, pro-active uplink scheduling must be activated with a reasonable scheduling window. This scheduling period is a trade-off between uplink scheduling delay and downlink performance degradation. In the setup used 1.4 ms led to best results.

As can also be seen in figure 9, not every subframe has the same slot structure. Some of the slots are reserved for signaling or guard periods, and deplorably, those are somewhat scattered over the subframes. For example, in downlink every second subframe shows a similar structure (1-3, 2-4, ...) which means that the same timing condition (sending/scheduling correlation) is met every 20 ms. A similar consideration can be made for the uplink.

Taking all this into consideration, it becomes clear that it is essential to gain knowledge about the scheduling/-sending correlation at any point in time in order to keep scheduling delays down. Deplorably, 3GPP R15 does not provide means that allow the UE to make such distinguishments. R16 and R17 do provide means, however, chip vendors are reluctant to implement according to standards features, so the problem may remain for quite some time.

The present disclosure enables the use of PTP time synchronization for TDD based connections, such as the 5G air interface, by limiting the jitter per link (uplink / downlink) to a minimum.

This may be achieved by introducing a 5G-aware PTP node. It is furthermore suggested to include one or more of the following:

- intermitting the transfer of PTP messages (boundary clock);
- Implementing a Link Adaptive Synchronization Protocol, LASP, between the 5GS and a 5G UE (air interface), the LASP providing the functionality of

  ◦ Probing the roundtrip delay by sending periodic messages with repetition rates optimized for a given TDD/TDMA pattern;
  ◦ Calibrating the periodicity parameters for uplink and downlink separately;
  ◦ Deriving the time offset between a sync master (5GS-core) and a sync slave;
  ◦ Calculating the time at the slave when a LASP message will be received by the slave;
  ◦ Sending a time stamp based on the calculated arrival time in a message, the message being sent at a time following the periodicity parameters derived during calibration;

- The sync-slave adjusting its system time to the received time stamp.

Furthermore, this disclosure allows to reduce the delay per link to a minimum by probing possible offset times, and/or applying both, optimal offset time and optimal message forwarding period. It should be noted that sync-master and sync-slave are used as example terminology, other terms e.g. primary synchronization node and secondary synchronization node can be used as well.

The disclosure allows a 5G system to be integrated into a given L2 or L3 infrastructure by offering a 5G aware PTP transparent mode or 5G aware boundary clock mode.

Some advantages of the present disclosure include:

- the proposed configuration makes 5G commercial equipment (Core, RAN, UE) applicable for manufacturing environments;
- It closes a gap (time synchronization) which so far ruled out 5G for industrial use cases (missing timing accuracy);
- It works with 5G release 15 and does not mandate availability of specific R16/17 capabilities;
- It can also be applied to 4G;
- It can also be applied to any TDD/TDMA based communication systems
- since it supports IEEE 1588 it is especially applicable for US / APAC markets and does not mandate existence of TSN;
- It is an over-the-top solution (OTT) and allows to comply with 5G 3GPP standards as well as to IEEE standards;
- It can be applied to IEEE 1588 (PTP or UDP) and to IEEE 802.AS (PTP over Ethernet) and it can mediate, between both standards.

System Calibration towards Air-Interface

As discussed above, messages shall only be sent at given rates in downlink or uplink (e.g., every 40ms/10 ms for a 1-4 pattern etc.). However, it is important to find the most suitable offset time $t_{off}$ to start with. In other words: if the strict delay schedule were kept but with an arbitrary offset the result would be a constant delay but not necessarily a minimum delay. Therefore, both master and slave will run procedures to find the best matching $t_{off}$.

Downlink Calibration

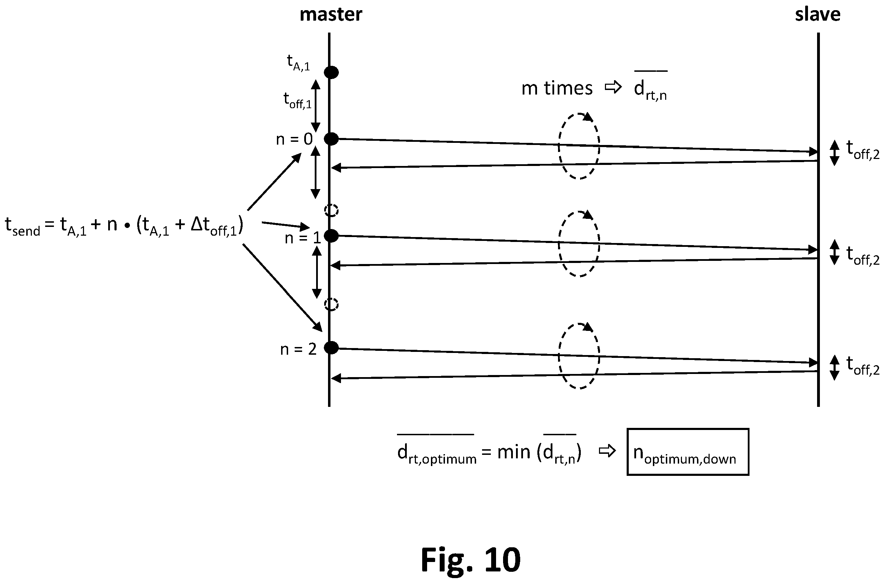

The master will send out probes at a fixed rate $t_{off,1}$ (e.g., every 10ms) starting with its local time $t_{A,1}$ and the slave will respond back at fixed rates $t_{off,2}$ (e.g., 40 ms). The master will do this e.g. 50 times and calculate the mean roundtrip delay. Next, the master will repeat the procedure but shift its starting time by $t_{off,1}$ of 0.5 ms (the size of a slot). It will repeat this procedure until the 10 ms of a subframe have been scanned (see figure 10), i.e., it repeats the procedure n times with n being 20. After this procedure, the value $n_{optimum,down}$, which is the value for n which resulted in the smallest mean roundtrip delay, will define the offset $t_{off,1}$ to $n_{optimum,down} \cdot 0.5$ ms. and the local start time $t_{A,1}$ will be adjusted to $t_{A,1,new}$ which is $t_{A,1}$ + to $n_{optimum,down} \cdot 0.5$ ms. Further on all sync-related messages in downlink direction will have to be conveyed only at times that follow the rule: $t_{send,downlink} = t_{A,1},new +n \cdot t_{off,1}$.

Uplink Calibration

So far, a minimum downlink delay can be achieved. In uplink, however, only a constant delay is achievable since the $n_{optimum,up}$ still needs to be derived.

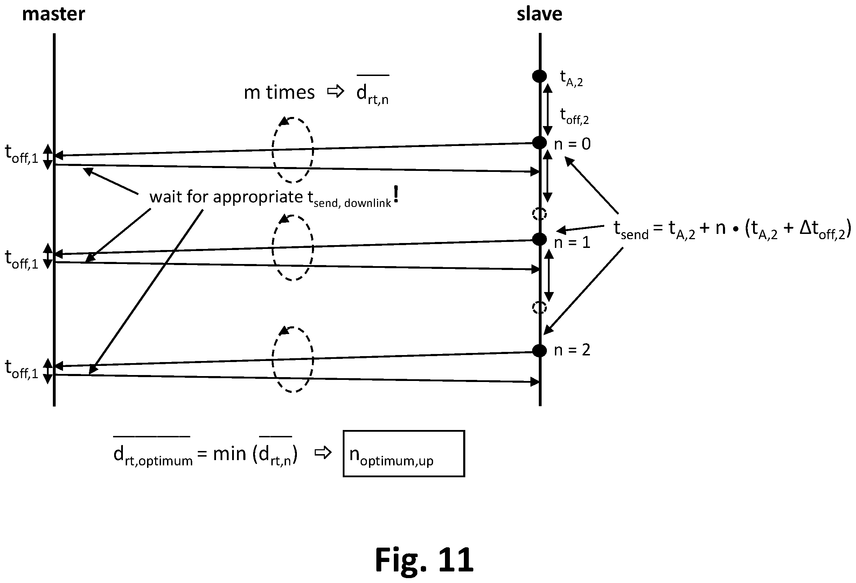

Figure 11 shows a similar procedure for deriving the optimum uplink offset time $t_{A,2,new}$. The procedural steps are the same as for downlink calibration, however, it should be noted that replies sent by the master must already follow the timing scheme derived at downlink calibration. After calibration, sync messages sent in uplink must follow the rule: $t_{send,uplink} = t_{A,2,new} +n \cdot t_{off,2}$ .

Impact of Calibration on Jitter

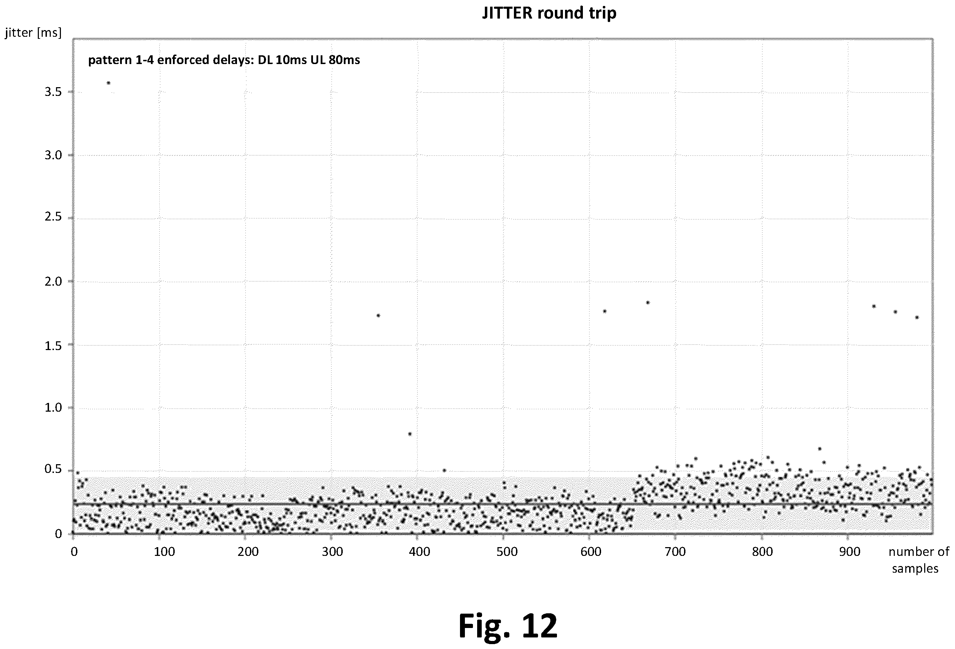

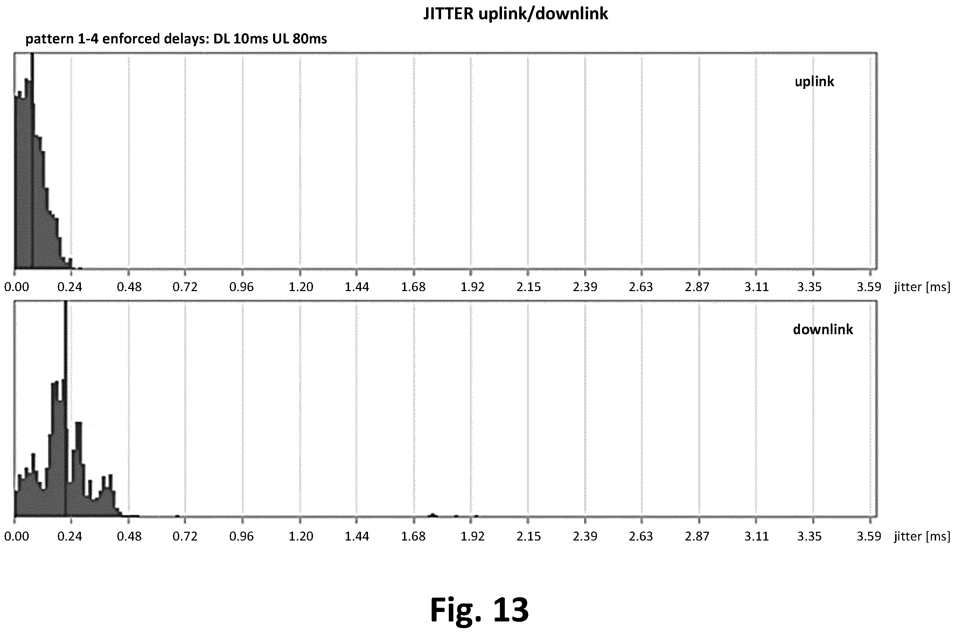

The following two figures 12 and 13 show the roundtrip jitter for a 1-4 pattern after calibration in accordance with the present disclosure. All messages sent in downlink followed a strict 10 ms schedule, all messages sent in uplink followed a strict 80 ms schedule. As can be seen, the jitter is now very much lower and more predictable than it was before calibration (figure 5). It is around 0.2 ms and stays within 0.4 ms - a good basis for the targeted 1 ms accuracy. Nevertheless, as can be seen especially in the first figure 12, there is still a fly in the ointment: there is a sudden raise of jitter of ~ 0.5 ms in the third section of the abscissa. This effect comes from the time drift at the slave. If the time deviation exceeds $\pm 0.5$ ms, the succeeding or the forerunning slot will be hit. The experience with different HW platforms showed that the drift may go up to >0.5ms/sec and therefore a compensation of the time drift is an issue . In the present disclosure, once a drift value has been derived, all measured time values (also in the calibration phase) will be corrected according to the derived drift.

System Architecture

Given the TDD nature of 5G bands assigned for industry and given the accuracy needed for PTP transmission (around 100 ns) it will not be possible to convey PTP sync messages directly end-to-end via a 5G air-interface. The expected jitter will be in the range around 0.5 ms if the system is calibrated against the air-interface and the jitter may be up to 8 ms otherwise.

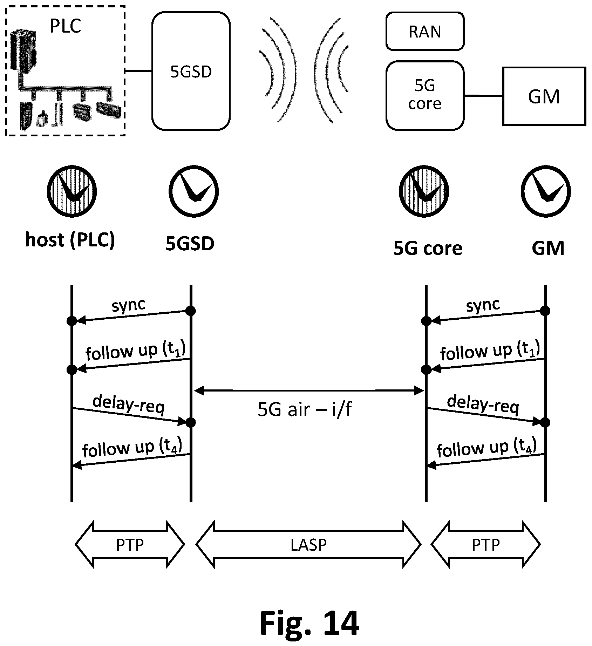

The PTP protocol requires the master to send out synchronization messages and follow-up messages periodically, e.g., every 100 ms, the client will send response messages. While the sending of downlink sync messages (master to slave) may somewhat be correlated with the downlink calibration pattern (e.g., 40 ms), the responses from the sync-clients may happen arbitrarily and do not allow for adjusting to an uplink calibration pattern. As a consequence, sync-clients may never (or hardly) reach the PTP-sync state, i.e., the PTP clients would consider the local system clock to be more accurate than the master clock. Therefore, synchronization is realized by a boundary clock implementation, as shown in figure 14.

The synchronization is provided by a grandmaster GM to a PTP client resided at the 5G core. The GM acts as a PTP master (clock symbol) and the core PTP client acts as a PTP slave. The PTP protocol is terminated at a node resided at the 5G core.

The key functionality of the synchronization system is the LASP (link adaptive synchronization protocol) as shown in figure 14. This protocol runs between two software entities, a master part at the core side and a slave part at the UE side. The protocol itself may be solely based on a ping-pong kind of sending probes and responses as shown in figure 4.

Those messages may comprise additional information elements which will trigger procedures and routines that will be described further on.

There are many parameters that allow for adjusting the master/slave behavior. These are stored in one single text file at the master side, instructions meant for the slave will be reported by the master-this allows to keep the UE "clean", i.e., nothing for synchronization needs to be administered there. This configuration file can be modified with a text editor. Since the target is a 1 ms timing accuracy, the software or the software functions are extremely sensitive towards timing delays (10s of $\mu$s accuracy). Therefore, timers and threading mechanisms are not employed since these mechanisms inevitably add jitter and may lead to an unpredictable behavior (in sub ms range).

Synchronization Phases and System Stability

It is important to note that neither the slave nor the master shall be synchronized by means of the OS as e.g., NTP or SNTP. All implicit synchronization mechanisms must be switched off otherwise the PTP time synchronization will be circumvented by a less exact implicit synchronization.

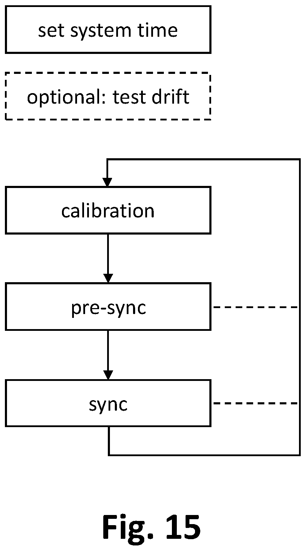

During runtime several synchronization phases will pass (see figure 15). At program start of both entities, master (e.g. first network element) and slave (e.g. second network element) will establish communication and the master will send configuration details to the slave. As shown in figure 15, at this point in time the master will send its system time and the slave will accept this time and set its own system time. Since no synchronization mechanisms have taken place so far, the system time at the slave may still deviate from the correct master time because of unknown delays and jitter. However, it is necessary to set the time even if it is faulty. Due to time drift the slave may have a time deviation to the master of seconds or minutes and any time sent by the master will be more correct serving as a starting time.

Optionally, a drift test may be carried out to distinguish the drift rate at the slave. This drift test does not need to be carried out at each start up but must be done at least once.

In the next step a calibration towards the air interface is done as described above. Once the optimal offset parameters have been evaluated, the system enters the pre-sync phase. In this phase e.g. some hundred probes and responses will be sent and the KPI (delay, jitter offset) are monitored quite strictly: if one of the parameters is violating a given range, the system will switch back to calibration phase.

After the system passes this test, it will enter the sync-phase where the slave times will be adjusted by the master. During this phase KPI are constantly monitored (less stringent allowing three subsequent KPI range violations). If KPI does not stay in the given range, the system will go back to the calibration phase.

Most typically, the slave (e.g. residing at the UE) will stay in calibration phase for far less than a minute, the pre-sync phase will last some seconds and the sync-phase will last most of the runtime.

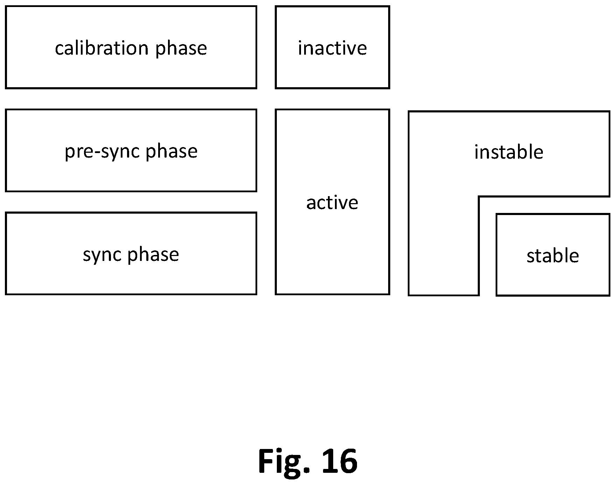

During runtime system stability will be distinguished by constant monitoring of KPI. Some parameters for estimating stability and/or KPI violation are related to a period that comprises of number of cycles with one cycle being defined as sending a probe and receiving the response. Those parameters are e.g., length of the pre-sync phase or initiation of a calibration. As shown in figure 16, these counters will be incremented when the system is considered active, i.e., during pre-sync and sync phase and will be reset when the system is considered inactive, i.e., when entering the calibration phase. During active phase KPI will be monitored.

When the system is considered active it is still considered instable as long as it is in pre-sync phase. When the system is in the sync phase and the KPI will not be violated for a given number of cycles and the offset stays within an allowed range (e.g., -0.5 ms to +0.5 ms) for a given number of subsequent cycles, the system is considered stable. The system will be considered instable again if the offset will violate range for a given number of subsequent cycles.

The master will only send time proposals to the salve when the system is considered stable.

Calibration Phase

The calibration will be carried out according to the description of uplink and downlink calibration.

Pre-Sync Phase

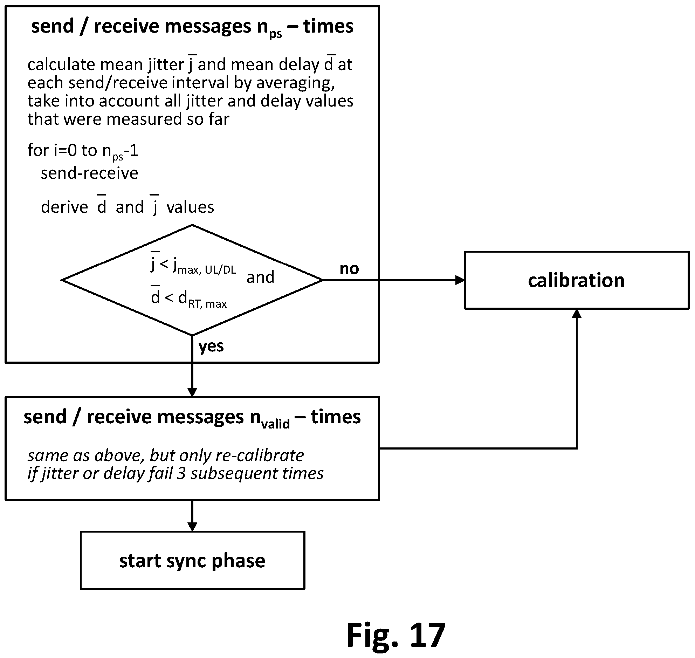

The pre-sync phase is joined right after calibration. During this phase, probes will be sent and responded to $n_{ps}$ times (see figure 17). During this time, mean jitter (uplink and downlink separately) and mean delay values will be monitored strictly, i.e., each valid-range violation will bring the system back to calibration phase.

After this the stability will be monitored for another $n_{valid}$ number of probes with a less stringent violation rule (only after three subsequent range violations system will go back to calibration).

If both parts, strict monitoring and less stringent monitoring have been passed, the system will enter the sync-phase.

Synchronization Phase

Typically, the system stays in this phase for more than 99% of its time. In this phase the master will provide timing information within each downlink message (e.g., every 40 ms). The time proposals the master is sending to the slave are estimated times based on measurements and reflect the assumed time at the slave, i.e., in case the proposed time is within a defined range the slave will set its own time to the proposed time. Equations below show how the time at the slave is calculated by the master. The values for delays have already been explained as before. Note that the best value for *"MagicNumber"* turned out to be zero.

$$\text{TargetTime\_Slave} = \text{Time\_Master} + \overline{d_d} + \overline{\text{Off}} + \textit{MagicNumber}$$

wherein the TargetTime_Slave is the time at the second network element when the LASP (Link Adaptive Synchronization Protocol) message will be received by the second network element, the parameter Time_Master is the time when the LASP (Link Adaptive Synchronization Protocol) message is sent from the first network element, the parameter $d_d$ is downlink delay which means the time difference between the first network element sends the LASP message and the second network element receives the LASP message, the parameter Off is an offset value, wherein,

$$\text{Off} = \frac{d_d - d_u}{2} + \textit{MagicNumber},$$

$$\overline{\text{Off}} = \sum_{i=0}^{n-1} \frac{d_{d,i} - d_{u,i}}{2*n} + \textit{MagicNumber},$$

$$\textit{MagicNumber} = (d_{min} - d_{RT})/2,$$

wherein n is a natural number greater than or equal to 1, i is a natural number less than n, $\overline{d_d}$ is average of n $d_d$, $\overline{\text{Off}}$ is average of n Off, $d_{min}$ is a minimum delay of uplink and/or downlink, $d_{RT}$ is a roundtrip delay.

While the system and method described above allows to reduce the jitter to the pure processing and propagation jitter, the delay may still be high (see figure 4 and description) depending how valid period and message sending time coincide. PTP offset calculation is more accurate the more uplink and downlink delays are alike, it is most beneficial to also bring delay down to a minimum. However, in case of processing delays it may not be able to be kept at any time therefore n=2 or 3 will also allow for keeping the jitter low in case n=1 is failed occasionally. As can be seen from the equations above, the sending time may be placed unluckily with up to 9 slots delay or luckily with 0 slots delay.. After the reception of the response message a roundtrip delay will be calculated. Then the offset will be incremented (by 1 ms in one example) and the test will be repeated until the offset has reached the frame length FL (10 ms in one example). After the test cycle the offset with the lowest round trip time shall be used. Note that the offset can also be increased by smaller steps than 1 ms.

In summary, the present disclosure provides a system and method to enable the use of PTP time synchronization for TDD based connections, such as the 5G air interface, by limiting the jitter per link (uplink/downlink) to a minimum.

It is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the CU, the DU, etc.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above-described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

List of abbreviations:

| Abbreviation | Description |
| --- | --- |
| TDD | Time Division Duplexing |
| MES | Manufacturing Execution System |
| PLC | Program Line Control |
| GM | Ground Master |
| PTP | Precision Time Protocol |
| UDP | User Datagram Protocol |
| BER | Bit Error Rate |
| LASP | Link Adaptive Synchronization Protocol |
| OTT | Over-the-Top |
| RAN | Radio Access Network |
| UE | User Equipment |

**Claims**

1. A first network element configured to calibrate at least one periodicity parameter for time synchronization, wherein the first network element comprises:

   at least one processor; and
   at least one memory storing instructions that, when executed by the at least one processor, cause the first network element at least to:

   probe a roundtrip delay by sending periodic messages to a second network element in accordance with repetition rates;
   derive a time offset between the first network element and the second network element;
   calculate a receiving time when a first message will be received by the second network element;
   send a message to the second network element, the message including a time stamp which is based on the receiving time.

2. The first network element according to claim 1, further caused to:

calibrate at least one periodicity parameter for uplink and downlink separately.

3. The first network element according to claim 1 or 2, further caused to, further caused to, for calibration of the periodicity parameters: set an offset and/or a local start time for sending messages by the first network node based on a smallest mean roundtrip delay.

4. The first network element according to any of the preceding claims, wherein for an uplink calibration the first network element is configured to send replies in accordance with a downlink timing scheme derived at a downlink calibration.

5. The first network element according to any of the preceding claims, wherein sending to the second network element the time stamp in the message further comprises:
sending the message at a time following the at least one periodicity parameter for uplink and downlink derived during calibration.

6. The first network element according to any of the preceding claims, is further caused to intermit the transfer of at least one PTP message.

7. The first network element according to any one of claims 1 to 6 wherein, before probing the roundtrip delay, the first network element is further caused to:
send, to the second network element, an initial time stamp derived from system time of the first network element.

8. The first network element according to any one of claims 1 to 7, is further caused to:
carry out a drift test to distinguish a drift rate at the second network element.

9. The first network element according to any one of claims 1 to 8, after deriving the time offset between the first network element and the second network element, the first network element is further caused to:

send, to the second network element, at least one additional first probe;
receive, from the second network element, a response for each of the at least one additional first probe;
monitor the roundtrip delay and/or a jitter offset on receiving the response of each of the at least one additional first probe from the second network element.

10. The first network element according to any one of claims 1 to 9, wherein the first message is a LASP, Link Adaptive Synchronization Protocol, message and/or the first network element is further configured to mediate between different standards in particular between an IP/ UDP, user data protocol, and an Ethernet, layer 2 protocol.

11. A second network element configured to calibrate at least one periodicity parameter for supporting time synchronization, wherein the second network element comprises:

at least one processor; and
at least one memory storing instructions that, when executed by the at least one processor, cause the second network element at least to:

receive, from the first network element, a time stamp determined in accordance with any one of claims 1 to 10;
calibrate periodicity parameters at the second network element in accordance with the received information, in particular, adjusting the system time of the second network element in accordance with the received time stamp.

12. The second network element according to claim 11, before receiving, from the first network element, the time stamp, the second network element is configured to:

receive, from the first network element, a system time of the first network element;
set the system time of the second network element in accordance with the received system time of the first network element.

13. The second network element according to claim 11 or 12, wherein for calibration of the periodicity parameters the second network element is configured to: set an offset and/or a local start time for sending messages by the second network node based on a smallest mean roundtrip delay.

**14.** A method for link adaptive synchronization in a network including a first and second network element, the method comprising:

probing, by a first network element, a roundtrip delay by sending periodic messages to a second network element with repetition rates;
deriving, by the first network element, a time offset between the first network element and the second network element;
calculating, by the first network element, a receiving time when a first message is received by the second network element;
sending a message, by the first network element to the second network element, including a time stamp based on the receiving time.

**15.** A computer readable medium storing instructions thereon, the instructions, when executed by at least one processing unit of a machine, causing the machine to perform the method according to claim 14.

Fig. 1

**Fig. 2**

master       slave

sync

$t_1$

$t_2$

follow up ($t_1$)

$t_3$

delay-req

$t_4$

delay resp ($t_4$)

$$d_{path} = \frac{[(t_4 - t_1) - (t_3 - t_2)]}{2}$$

$$O_{S\ to\ M} = (t_2 - t_1) - d_{path}$$

**Fig. 3**

$$d_d = t_2 - t_1 + \text{Off}$$
$$d_u = t_4 - t_3 - \text{Off}$$
$$d_{rt} = d_d + du$$
$$d_{rt} = t_2 - t_1 + t_4 - t_3$$
$$d_d = d_{p,d} + d_{sched,d}$$

↑     ↑

const    target: ~ 0ms

↓     ↓

$$d_u = d_{p,u} + d_{sched,u}$$

$$d_d = d_{p,d} + d_{sched,d} + \text{Off}$$
$$d_u = d_{p,u} + d_{sched,u} - \text{Off}$$

**master**          **slave**

$t_1$

$t_2$

$t_2$   $t_3$

$t_3$

$t_4$

$$d_d - d_u = d_{p,d} + d_{sched,d} - d_{p,u} - d_{sched,u} + 2 \cdot \text{Off}$$

$$\text{Off} = \frac{d_d - d_u + d_{p,d} - d_{p,u} + d_{sched,d} - d_{sched,u}}{2}$$

↑      ↑      ↑

*measured*   *constant (0?)*   *0, +/- failure*

# Fig. 4

EP 4 633 068 A1

Fig. 5

JITTER uplink/downlink

Fig. 6

JITTER uplink/downlink

pattern 3-7 pro-active scheduling

uplink

0.00    0.24    0.48    0.72    0.97    1.21    1.45    1.69    1.93    2.17    2.41    2.66    2.90    3.14    jitter [ms]

downlink

0.00    0.24    0.48    0.72    0.97    1.21    1.45    1.69    1.93    2.17    2.41    2.66    2.90    3.14    jitter [ms]

Fig. 7

Fig. 8

EP 4 633 068 A1

slot

| SSB | TRS | DL | S | UL | UL | DL | DL | DL | DL | DL | DL | DL | S | UL | UL | DL | DL | DL | DL |
|-----|-----|----|---|----|----|----|----|----|----|----|----|----|---|----|----|----|----|----|----|
| DL | DL | DL | S | UL | UL | DL | DL | DL | DL | DL | DL | DL | S | UL | RA | DL | DL | DL | DL |
| SSB | TRS | DL | S | UL | UL | DL | DL | DL | DL | DL | DL | DL | S | UL | UL | DL | DL | DL | DL |
| DL | DL | DL | S | UL | UL | DL | DL | DL | DL | DL | DL | DL | S | UL | RA | DL | DL | DL | DL |
| SSB | TRS | DL | S | UL | UL | DL | DL | DL | DL | DL | DL | DL | S | UL | UL | DL | DL | DL | DL |
| DL | DL | DL | S | UL | UL | DL | DL | DL | DL | DL | DL | DL | S | UL | RA | DL | DL | DL | DL |
| SSB | TRS | DL | S | UL | UL | DL | DL | DL | DL | DL | DL | DL | S | UL | UL | DL | DL | DL | DL |
| DL | DL | DL | S | UL | UL | DL | DL | DL | DL | DL | DL | DL | S | UL | RA | DL | DL | DL | DL |

frame

## Fig. 9

master                                                                    slave

$t_{A,1}$

$t_{off,1}$

m times  $\Rightarrow$  $\overline{\overline{d_{rt,n}}}$

n = 0

$t_{off,2}$

$t_{send} = t_{A,1} + n \cdot (t_{A,1} + \Delta t_{off,1})$

n = 1

$t_{off,2}$

n = 2

$t_{off,2}$

$\overline{\overline{d_{rt,optimum}}} = \min(\overline{\overline{d_{rt,n}}})$  $\Rightarrow$  $\boxed{n_{optimum,down}}$

## Fig. 10

EP 4 633 068 A1

**master**      **slave**

$t_{A,2}$

m times $\Rightarrow \overline{d_{rt,n}}$

$t_{off,2}$

$n = 0$

$t_{off,1}$

wait for appropriate $t_{send,\ downlink}$ !

$t_{send} = t_{A,2} + n \cdot (t_{A,2} + \Delta t_{off,2})$

$t_{off,1}$

$n = 1$

$t_{off,1}$

$n = 2$

$\overline{d_{rt,optimum}} = \min (\overline{d_{rt,n}}) \Rightarrow \boxed{n_{optimum,up}}$

**Fig. 11**

EP 4 633 068 A1

Fig. 12

Fig. 13

**Fig. 14**

EP 4 633 068 A1

EP 4 633 068 A1

set system time

optional: test drift

calibration

pre-sync

sync

**Fig. 15**

calibration phase

inactive

pre-sync phase

active

instable

sync phase

stable

**Fig. 16**

**send / receive messages $n_{ps}$ – times**

calculate mean jitter $\bar{j}$ and mean delay $\bar{d}$ at each send/receive interval by averaging, take into account all jitter and delay values that were measured so far

for i=0 to $n_{ps}$-1
send-receive

derive $\bar{d}$ and $\bar{j}$ values

$\bar{j} < j_{max,\,UL/DL}$ and $\bar{d} < d_{RT,\,max}$

no

yes

**calibration**

**send / receive messages $n_{valid}$ – times**

*same as above, but only re-calibrate if jitter or delay fail 3 subsequent times*

**start sync phase**

**Fig. 17**

Europäisches
Patentamt
European
Patent Office
Office européen
des brevets

# EUROPEAN SEARCH REPORT

**Application Number**

EP 25 16 3383

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 153 838 B1 (THOTA JAYASHREE [GB]) 19 October 2021 (2021-10-19) * column 2, line 18 - line 45 * * column 3, line 48 - line 65 * * column 12 * * column 13, line 55 - line 66 * * figures 3,5,6 * | 1-15 | INV. H04J3/06 H04L43/0864 H04W56/00 |
| A | WO 2023/050252 A1 (ZTE CORP [CN]) 6 April 2023 (2023-04-06) * page 2 - page 3 * * page 16 * * page 22 * * figures 3,4 * | 1-15 | |
| A | CN 115 623 580 A (WEILAI SOFTWARE TECH SHANGHAI CO LTD) 17 January 2023 (2023-01-17) * paragraph [0025] - paragraph [0034] * * paragraph [0045] * * paragraph [0051] - paragraph [0053] * * paragraph [0123] * * figures 3-6 * | 1-15 | TECHNICAL FIELDS SEARCHED (IPC) H04W H04J H04L |

The present search report has been drawn up for all claims

| Place of search | Date of completion of the search | Examiner |
|---|---|---|
| The Hague | 3 September 2025 | Marongiu, M |

EPO FORM 1503 03.82 (P04C01)

## ANNEX TO THE EUROPEAN SEARCH REPORT
## ON EUROPEAN PATENT APPLICATION NO.

EP 25 16 3383

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2025

| Patent document cited in search report | Publication date | Patent family member(s) | Publication date |
|---|---|---|---|
| US 11153838 B1 | 19-10-2021 | NONE | |
| WO 2023050252 A1 | 06-04-2023 | CN 118020335 A | 10-05-2024 |
| | | EP 4393188 A1 | 03-07-2024 |
| | | US 2025024409 A1 | 16-01-2025 |
| | | WO 2023050252 A1 | 06-04-2023 |
| CN 115623580 A | 17-01-2023 | NONE | |